Europäisches Patentamt

European Patent Office

Office européen des brevets

(19)

(11) Veröffentlichungsnummer: **0 416 590 A2**

(12) **EUROPÄISCHE PATENTANMELDUNG**

(21) Anmeldenummer: 90117118.1

(22) Anmeldetag: 05.09.90

(51) Int. Cl.⁵: **B64C  29/00**

(30) Priorität: 08.09.89 DE 3929886

(43) Veröffentlichungstag der Anmeldung:
13.03.91 Patentblatt  91/11

(84) Benannte Vertragsstaaten:
FR GB IT

(71) Anmelder: **Dornier, Conrado**
**Carl-Benz-Strasse 11**
**W-8031 Gilching(DE)**

(72) Erfinder: **Dornier, Claudius jun., Prof.**
**Dipl.-Ing.**

**Verstorben(DE)**
Erfinder: **Windischbauer, Florian, Dipl.-Ing.**
**Gruberweg 2**
**W-8990 Lindau(DE)**

(74) Vertreter: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**W-8000 München 2(DE)**

(54) **Flugzeug mit um eine Querachse kippbaren Triebwerksgondeln.**

(57)  Die Erfindung betrifft ein Flugzeug mit außen an
den Tragflächen angeordneten und um eine Querachse kippbaren Triebwerksgondeln. Es ist ein ortsfestes Flügelmittelstück vorgesehen, das in Spannweitenrichtung außen jeweils durch eine Trennstelle
abgeschlossen ist. In dem Flügelmittelstück ist ein
durchgehender Rohrholm drehbar gelagert. Dieser
Rohrholm dient als Träger für die außerhalb der
Trennstellen sich anschließenden Außenflügel, welche zusammen mit den dort angeordneten Triebwerksgondeln jeweils eine gemeinsam verschwenkbare oder kippbare Einheit bilden.

Fig 1b

men: hohes Gewicht, Einschränkungen im Entwurf (große Rotordurchmesser), aeroelastische Beanspruchung insbesondere Böenempfindlichkeit, schlechte Reiseflugleistung, da der Rotor zu groß ist. Die Form des Flügels richtet sich hierbei nach dem Propellerdurchmesser und ist nicht optimal für den Reiseflug. Außerdem ergibt sich beim Verschwenken der Rotoren eine hohe Lagerbelastung am Flügelende, die von verhältnismäßig kleinen, dort angeordneten Zapfen aufgenommen werden muß. Außerdem ist eine Normallandung mit unverschwenkten Gondeln im Notfall nicht möglich und die großen Rotoren bedingen eine komplexe Ausbildung des Rotorkopfes ähnlich wie bei Hubschraubern mit vollzyklischer Blattverstellung.

Der Erfindung lag die Aufgabe zugrunde, die bei Kippflügel- und Kippgondelkonfiguration oben dargelegten Nachteile zu vermeiden. Insbesondere soll der mechanische Aufwand bei Kippflügeln möglicht weitgehend verringert und bessere Schwebeflugeigenschaften erreicht werden. Andererseits soll die bei Kippgondelkonfigurationen störende Beaufschlagung von großen Teilen des feststehenden Tragflügels beim Schwebeflug, sowie die hohe Lagerbelastung vermindert werden. Schließlich soll die komplizierte Rotorkopfsteuerung der Kippgondelkonfiguration vereinfacht werden. Nach einem weiteren Schritt der Aufgabe soll auch noch gegebenenfalls wahlweise Vertikalstart oder Horizontalstart bzw. - Landung durchführbar sein.

Zur Lösung der Aufgabe dienen die im kennzeichnenden Teil des Patentanspruches 1 angebenen Merkmale. Weiterbildende Merkmale und Vorteile der Erfindung sind den Unteransprüchen und der Beschreibung zu entnehmen.

Durch die erfindungsgemäße Aufteilung des Tragflügels in ein feststehendes Flügelmittelstück und daran anschließende kippbare Außenflügel wird eine Beaufschlagung des quer zum Triebwerksstrahl liegenden Flügels erheblich reduziert und durch die Ausgestaltung der Triebwerksgondeln als Einheit mit den Außenflügeln und deren gemeinsames Kippen bzw. Verschwenken wird eine günstige hohe Strahlflächenbelastung und eine Vereinfachung der Rotorsteuerung erreicht. Dadurch, daß die Außenflügel mit den Triebwerken auf einem durchgehenden und im Flügelmittelstück drehbar gelagerten Rohrholm als Träger angeordnet sind, werden die Lagerbelastungen am Ende des Flügelmittelstücks erheblich verringert. Auch die Steuerung der Rotoren in den Triebwerksgondeln wird einfacher, da eine vollständige Hubschrauber-Rotorkopfsteuerung nicht erforderlich ist. Dabei ist es für den Grundgedanken der Erfindung unerheblich, ob es sich um an sich bekannte Verstellpropeller oder um Drehflügelrotoren handelt. Im Bereich des Triebwerksstrahles, z.B. des Propellerstrahles, erfolgt wegen der mitverschwenkten Außenflügel eine gute Strahlführung für den Schwebeflug. Hohe Strahlflächenbelastung bedeutet einen kleineren Propellerdurchmesser. Der Radius des Rotorkreises kann dann kleiner werden als der Abstand der Triebwerksachse vom Boden bei nicht gekipptem Außenflügel, wodurch außer einem Vertikalstart wahlweise auch Horizontalstart bzw. -landung möglich wird.

Die erfindungsgemäße Zusammenfassung einer kippbaren Triebwerksgondel mit einem kippbaren Außenflügel zu einer Einheit bedingt an der Flügeltrennstelle zwischen Mittelstück und Außenflügel, wo die Schwenkung stattfindet, ein höheres Biegemoment verglichen mit einer Ausbildung einer Schwenkgondel ohne Außenflügel. Durch die Verwendung eines durchgehenden Rohrholmes wird man dieser erhöhten Beanspruchung gerecht und kann die Schwenkvorrichtung einfach halten. Anstelle der kurzen hochbeanspruchten Zapfen an der Trennstelle dient der durchgehende Rohrholm zur Aufnahme von Torsions- und Biegemomenten, ohne übermäßige Auflagekräfte im feststehenden Flügelmittelstück zu verursachen. Auf diese Weist genügt es, zum Verdrehen des Rohrholmes, d.h. zum Kippen der gesamten Triebwerksgondeln und der Außenflügel, nur eine einzige Schwenkvorrichtung, z.B. im Flugzeugrumpf, vorzusehen, was den Aufwand gegenüber den bisher bekannten Kippanordnungen wesentlich reduziert.

Da wie erwähnt der Rohrholm im Torsionskasten des Flügelmittelstücks verläuft, ist es notwendig, den Rohrholm an einigen Auflagepunkten zu lagern. Dies erfolgt vorzugsweise an zwei Punkten im Rumpf (Aufnahme der Querkräfte in die Rumpfaußenhaut) und jeweils mit einem Lager an den Trennstellen des Flügelmittelstücks zu den Außenflügeln. Zur Gewährleistung minimaler Auflagekräfte kann die Biegelinie des Rohrholmes möglichst weitgehend an die Biegelinie des Flügelmittelstücks angeglichen werden. Diese Angleichung kann sehr einfach durch entsprechende Ausbildung des Querschnitts im Rohrholm erfolgen.

Zur Verbesserung und Vereinfachung der Giersteuerung im Schwebeflug (Drehbewegung um die z-Achse) wird vorgeschlagen, die kippbaren Außenflügel mit Querrudern auszurüsten. Die Querruder können dann beim Schwebeflug für die Giersteuerung eingesetzt werden. Gemäß weiterer vorteilhafter Ausgestaltung der Erfindung können die Außenflügel in Spannweitenrichtung außerhalb der Triebwerke unterteilt sein, wobei als äußerer Abschluß der kippbaren Außenflügel jeweils ein im Außenflügel individuell verdrehbar gelagerter Flügelrandbogen angeordnet ist. Diese Flügelrandbogen können in der gleichen Weise wie Querruder zur Giersteuerung eingesetzt werden.

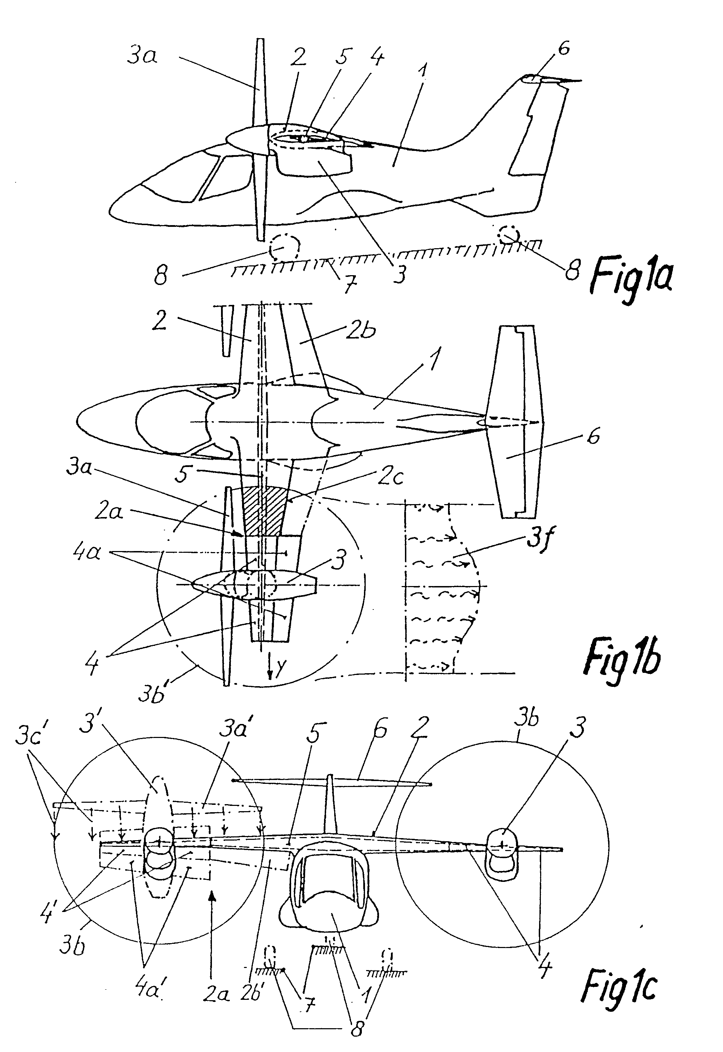

Für die Nicksteuerung im Schwebeflug ist vorgesehen, die Anstellwinkel der Propellerblätter auf

für den Schwebeflug verschwenkten Stellung 3' bzw. 4'. Die Propellerstrahlen des verschwenkten Propellers 3a' sind mit 3c' bezeichnet und im Schwebeflug nach unten zum Boden gerichtet. Sie finden durch den verschwenkten Außenflügel 4' gute Strömungsverhältnisse. Lediglich ein Teil dieser Propellerstrahlen 3c' trifft auf den feststehenden Teil des Mittelflügels 2, wobei allerdings die störende Fläche wegen der Triebwerkanordnung und der verschwenkten Bauteile minimiert ist. Wie aus der Figur 1b zu ersehen ist, umfaßt diese störende Fläche lediglich den schraffierten Teil des Flügelmittelstücks 2.

An den Außenflügeln 4 sind in herkömmlicher Weise Querruder 4a vorgesehen, die beim Reiseflug in üblicher Weise wirksam werden. Im Schwebeflug dagegen können die Querruder zur Erzeugung einer Gierbewegung, also einer Drehbewegung um die z-(Hoch-)Achse herangezogen werden.

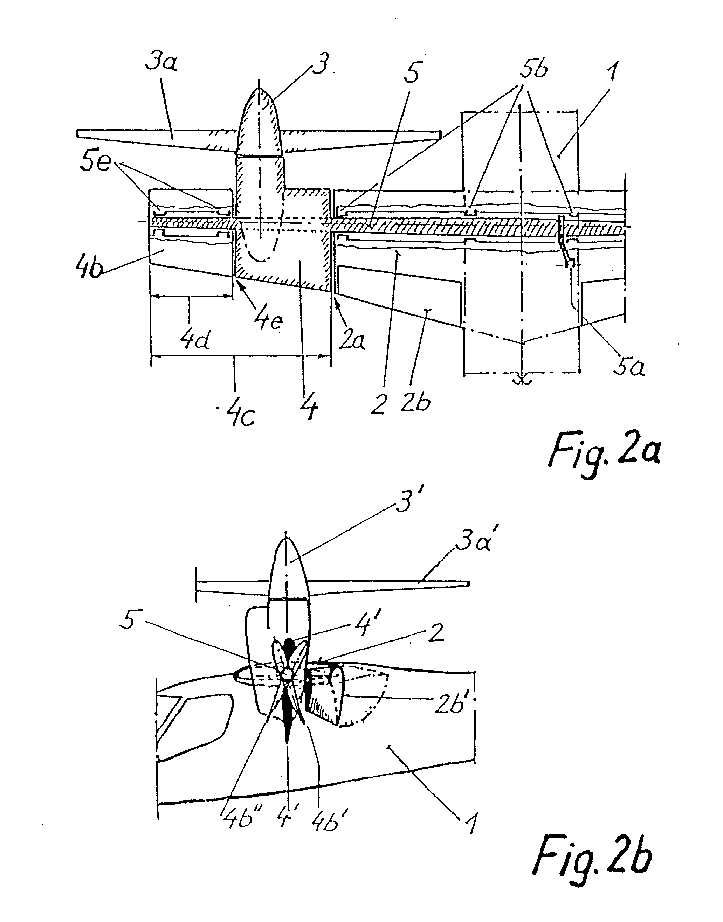

Es sei nun näher auf den durchgehenden Rohrholm 5 eingegangen. Wie die Figuren 1b und 2a zeigen, verläuft der Rohrholm 5 im gesamten Flügelmittelstück 2 von der einen Flugzeugseite auf die andere Flugzeugseite und trägt an seinen beiden Enden jeweils einen Außenflügel mit der Antriebsgondel. Der Rohrholm 5 ist an denjenigen Stellen, an denen er den Rumpf 1 durchdringt und an den Enden des Flügelmittelstückes 2, d.h. an den Trennstellen 2a drehbar in Lagern 5b gelagert. Um den Rohrholm zu verdrehen, ist im Rumpf eine Antriebsvorrichtung 5a vorgesehen. Bei dieser Ausgestaltung des Rohrholmes 5 ist ein synchrones Verschwenken bzw. Kippen der Außenflügel 4 mit ihren Antriebsgondeln 3 gewährleistet. Um die Anordnung des Rohrholmes 5 in der Zeichnung besser hervorzuheben, ist in der Figur 2a der Rohrholm mit dem fest auf ihm angeordneten Außenflügel 4 und Antriebsanlage 3 mit einer Schrafur versehen. Die Anordnung der Figur 2a enthält noch eine weitere Abwandlung in der Ausgestaltung des Außenflügels 4, auf die weiter unten noch besonders eingegangen wird. Gemäß Figur 2a weist der Außenflügel 4 eine Gesamtlänge 4c auf. Außerhalb der Triebwerksgondel 3 ist in einem Abstand 4d vom Ende des Außenflügels 4 eine Trennstelle 4e vorgesehen, durch die ein Flügelrandbogen 4b vom Hauptaußenflügel 4 abgetrennt wird. Der Flügelrandbogen 4b ist gegenüber dem eigentlichen Außenflügel 4 drehbar gelagert, z.B. in Lagern 5e auf einer Verlängerung des Rohrholmes 5. Zum Senkrechtstart bzw. Schwebeflug wird der gesamte Außenflügel 4 einschließlich des Flügelrandbogens 4b in der oben schon beschriebenen Weise verschwenkt, so daß die Propellerstrahlen den Außenflügel umströmend nach unten zum Boden geleitet werden. In dieser Position ist nun der Flügelrandbogen 4b unabhängig vom Außenflügel 4 ähnlich wie die oben genannten Querruder verschwenkbar. Der Flügelrandbogen 4b dient daher zur Durchführung von Giersteuerbewegungen. In der Figur 2b sind diese Verhältnisse für den Schwebeflug schematisch dargestellt. Der Einfachheit halber sind hier nur die wesentlichsten Teile der Anordnung dargestellt. Ersichtlich ist die für den Senkrechtflug verschwenkte Triebwerksgondel 3' mit ihrem Propeller 3a'. Das feststehende Flügelmittelstück 2 ist im Querschnitt angedeutet. Die an der Hinterkante des Flügelmittelstücks angeordneten Landeklappen 2b' sind vollständig, z.B. um 90°, nach unten ausgeschwenkt. Ferner ist der mit der Antriebsgondel eine Einheit bildende Außenflügel 4' in seiner Lage für den Schwebeflug eingezeichnet. Schließlich ist der Flügelrandbogen in zwei unterschiedlichen Stellungen 4b' und 4b" eingezeichnet. Wenn auf den beiden Seiten des Flugzeuges die Flügelrandbögen 4b gegensinnig verschwenkt werden, ist die Durchführung von Gierbewegungen im Schwebeflug ähnlich wie mit Querrudern durchführbar. Ergänzend sei noch vermerkt, daß in den Figuren 1b und 2a die Triebwerksgondeln 3 je nach den Erfordernissen in Spannweitenrichtung des Außenflügels 4 mehr oder weniger weit außerhalb der Trennstelle 2a zum Flügelmittelstück angeordnet sein können.

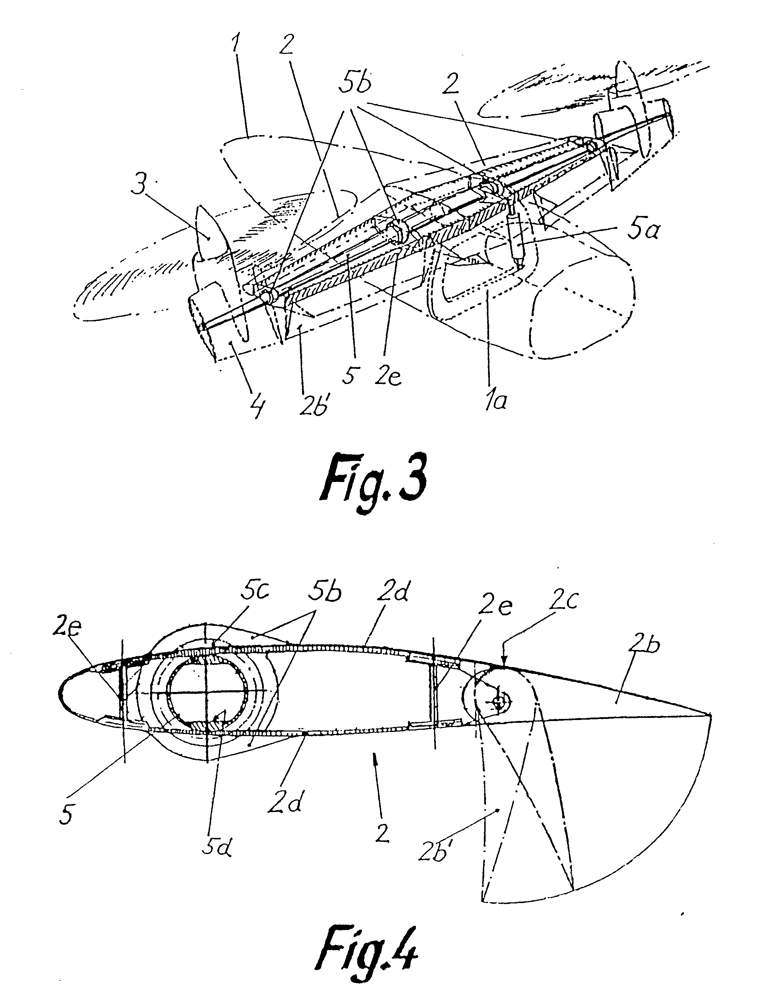

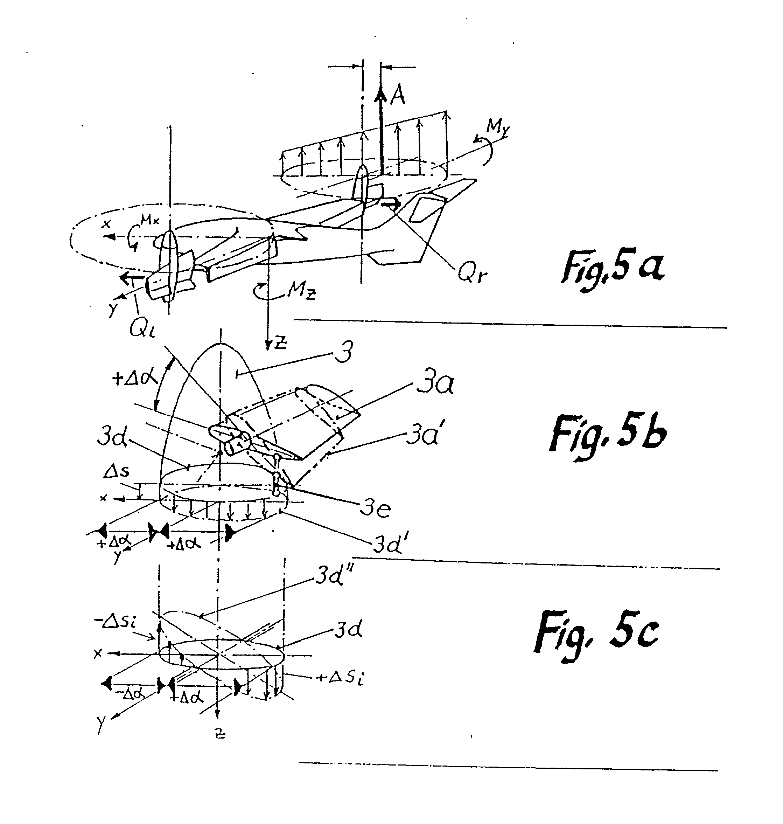

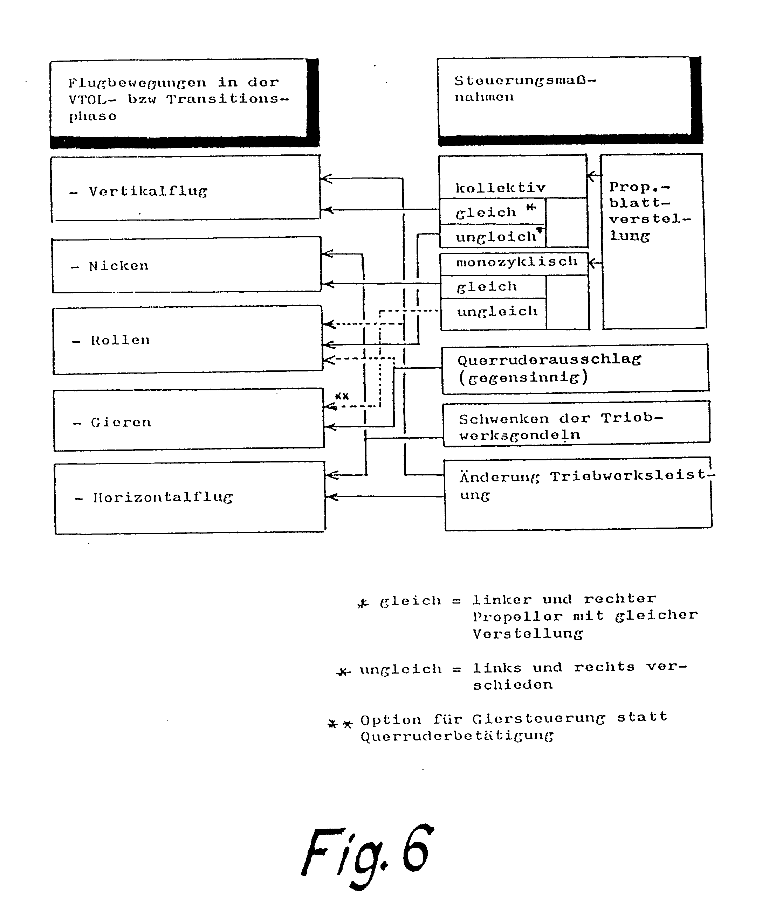

In der Figur 3 ist nochmals in perspektivischer Darstellung die Anordnung des Rohrholmes 5 im Flügelmittelstück und Rumpf aufgezeigt. Flugzeugrumpf 1 und Flügelmittelstück 2 sind mit strichpunktierten Linien nur angedeutet. Innerhalb des Flügelmittelstücks 2 ist durch Schraffur die Anordnung eines Torsionskastens mit einem vorderen und einem hinteren Holm 2e angedeutet. Lagerungen für die Verdrehung des Rohrholmes 5 sind vorgesehen an den beiden Durchtrittsstellen des Rohrholmes durch den Rumpf 1 und an den beiden Enden des Flügelmittelstückes 2b an den dortigen Trennstellen. Diese Lagerungen sind mit 5b bezeichnet. Für das Verdrehen des Rohrholmes 5 ist wieder eine Antriebseinrichtung 5a angedeutet und z.B. an einem Spant 1a des Rumpfes angelenkt.

Die Figur 4 zeigt einen Querschnitt durch das Flügelmittelstück. Erkennbar sind der vordere und hintere Holm 2e, sowie die obere und untere Deckschale 2d. Diese bilden einen Torsionskasten und geben dem Flügelmittelstück die erforderliche Steifigkeit. Mit 2c ist die eigentliche Flügelhinterkante bezeichnet, hinter der sich die Landeklappe 2b anschließt. Die Landeklappe 2b ist in drei verschiedenen Stellungen, nämlich in voll ausgezogenen Linien für den Reiseflug und in strichpunktierten Linien für den Schwebeflug, dargestellt. Die maximale Ausschlagstellung ist mit 2b' bezeichnet und beträgt ca. 90°. Im Torsionskasten ist der Rohrholm 5 angeordnet, der mittels Wälzlagern 5c an den Lagerstellen 5b im Torsionskasten gelagert ist.

Die Erfindung betrifft ein Flugzeug mit außen an den Tragflächen angeordneten und um eine Querachse kippbaren Triebwerksgondeln. Es ist ein ortsfestes Flügelmittelstück vorgesehen, das in Spannweitenrichtung außen jeweils durch eine Trennstelle abgeschlossen ist. In dem Flügelmittelstück ist ein durchgehender Rohrholm drehbar gelagert. Dieser Rohrholm dient als Träger für die außerhalb der Trennstellen sich anschließenden Außenflügel, welche zusammen mit den dort angeordneten Triebwerksgondeln jeweils eine gemeinsam verschwenkbare oder kippbare Einheit bilden.

**Ansprüche**

1) Flugzeug mit außen an den Tragflächen angeordneten und um eine Querachse kippbaren Triebwerksgondeln, gekennzeichnet durch

a) ein in Spannweitenrichtung durch Trennstellen (2a) begrenztes, ortsfestes Flügelmittelstück (2),

b) daran anschließende, mit den Triebwerksgondeln (3) eine Einheit bildende und gemeinsam mit diesen kippbaren Außenflügel (4),

c) einen im Flügelmittelstück (2) parallel zur Querachse (y) des Flugzeuges drehbar gelagerten durchgehenden Rohrholm (5) als Träger für die mit den Triebwerkgondeln (3) jeweils eine Einheit bildenden Außenflügel (4).

2) Flugzeug nach Anspruch 1, dadurch gekennzeichnet, daß der Rohrholm (5) in einem als steifer Kasten (2d, 2c) ausgebildeten Flügelmittelstück (2) an den die Außenwand des Flugzeugerumpfes (1) durchdringenden Stellen und an den Trennstellen (2a) zu den Außenflügeln (4) drehbar gelagert (5b) ist.

3) Flugzeug nach Anspruch 1 und 2, dadurch gekennzeichnet, daß eine wenigstens an einer Stelle des Rohrholmes (5) angreifende und seine Drehung bewirkende Antriebsvorrichtung (5a) innerhalb des Flugzeugrumpfes (1) angeordnet ist.

4) Flugzeug nach einem der Ansprüche 1 bis 3, gekennzeichnet durch Ausbildung des Rohrholmes (5) derart, daß seine Biegelinie an die Biegelinie des Flügelmittelstücks (2) weitgehend angeglichen ist.

5) Flugzeug nach einem der Ansprüche 1 bis 4, dadurch gekennzeichnet, daß die kippbaren Außenflügel (4) jeweils mit einem vom Triebwerksstrahl (3c) beaufschlagten Querruder (4a) ausgerüstet sind.

6) Flugzeug nach einem der Ansprüche 1 bis 5, dadurch gekennzeichnet, daß die Außenflügel (4) in Spannweitenrichtung außerhalb der Triebwerke (3) unterteilt (4e) sind und als äußerer Abschluß der kippbaren Außenflügel jeweils ein im Außenflügel individuell verdrehbar gelagerter (5e) Flügelrandbogen (4b) angeordnet ist.

7) Flugzeug nach Anspruch 6, dadurch gekennzeichnet, daß die Drehachse des Flügelrandbogens (4b) koaxial zur Achse des Rohrholmes (5) ist.

8) Flugzeug nach einem der Ansprüche 1 bis 7, gekennzeichnet durch die Anordnung von Landeklappen (2b) am Flügelmittelstück (2).

9) Flugzeug nach einem der Ansprüche 1 bis 8 und mit verstellbaren Rotorblättern ausgerüsteten Triebwerken, gekennzeichnet durch bedarfsweise einschaltbare monozyklische Steuerung der Rotorblätter (3a).

10) Flugzeug nach einem der Ansprüche 1 bis 9, dadurch gekennzeichnet, daß der Radius des im wesentlichen den gesamten Außenflügel (4) und Teile des Flügelmittelstücks (2) im Bereich der Trennstelle (2a) überdeckenden Rotorkreises (3b) kleiner ist als der Abstand der Triebwerksachse vom Boden (7) bei nicht gekipptem Außenflügel (4).

Fig 1a

Fig 1b

Fig 1c

8

Fig. 2a

Fig. 2b

**Fig.3**

**Fig.4**

Fig.5a

Fig.5b

Fig. 5c

| Flugbewegungen in der VTOL- bzw Transitionsphase | Steuerungsmaßnahmen | |
|---|---|---|
| - Vertikalflug | kollektiv | Prop.-blatt-verstel-lung |
| | gleich * | |
| | ungleich * | |
| - Nicken | monozyklisch | |
| | gleich | |
| | ungleich | |
| - Rollen | Querruderausschlag (gegensinnig) | |
| - Gieren | Schwenken der Trieb-werksgondeln | |
| - Horizontalflug | Änderung Triebwerksleist-ung | |

* gleich = linker und rechter Propeller mit gleicher Verstellung

* ungleich = links und rechts ver-schieden

** Option für Giersteuerung statt Querruderbetätigung

# Fig. 6